# EUROPÄISCHE PATENTSCHRIFT

(11) **EP 4 199 729 B1**
(45) Veröffentlichungstag und Bekanntmachung des Hinweises auf die Patenterteilung: **10.04.2024**
(21) Anmeldenummer: 21755075.5
(22) Anmeldetag: 04.08.2021
(51) Int. Cl.: A21D 2/18, A21D 10/00, A21D 13/062, A23L 27/30, C08B 37/00, C12P 19/04

(54) **ZUCKERERSATZSTOFF FÜR BACKWAREN ODER KONDITORWAREN**
SUGAR SUBSTITUTE FOR BAKED GOODS OR PASTRIES
SUCCÉDANÉ DE SUCRE POUR PRODUITS DE BOULANGERIE OU PÂTISSERIES

(30) Priorität: 20.08.2020 CH 10412020
(43) Veröffentlichungstag der Anmeldung: 28.06.2023
(73) Patentinhaber: Hello Sweety AG, 6343 Rotkreuz (CH)
(72) Erfinder: PAA, Marcel, 5643 Sins (CH)
(74) Vertreter: Prins Intellectual Property AG
(86) Internationale Anmeldenummer: PCT/IB2021/057149
(87) Internationale Veröffentlichungsnummer: WO 2022/038443

(56) Entgegenhaltungen:
- WO-A1-2020/015816
- DE-A1-102009 046 126
- TW-A- 200 901 899
- US-A1- 2018 020 707
- LUO XIAO ET AL: "A review of food reformulation of baked products to reduce added sugar intake", TRENDS IN FOOD SCIENCE AND TECHNOLOGY, Bd. 86, 21. Februar 2019 (2019-02-21), Seiten 412-425, XP085640005, ISSN: 0924-2244, DOI: 10.1016/J.TIFS.2019.02.051

## Beschreibung

### Technisches Gebiet

Die Erfindung betrifft einen Zuckerersatzstoff für Backwaren oder Konditorwaren, ein Verfahren zur Herstellung des Zuckerersatzstoffes, die Verwendung des Zuckerersatzstoffes zur Herstellung von Backwaren, Konditorwaren und Backmischungen, sowie Backwaren, Konditorwaren und Backmischungen umfassend den erfindungsgemässen Zuckerersatzstoff.

### Stand der Technik

Zuckerersatzstoffe sind schon lange bekannt und gewinnen immer mehr an Bedeutung, weil das Interesse an einer reduzierten Zuckeraufnahme in der Ernährung durch gesundheitsbewusste Konsumenten zunimmt. Es ist daher das Ziel vieler Lebensmittelhersteller, Zucker in Lebensmitteln zu reduzieren oder ganz zu ersetzen.

Besonders in kalorienreduzierten Getränken wird der Zucker schon länger durch Süssstoffe ersetzt. Dabei wird eine kleinere Menge an Süssstoffen gebraucht, um dieselbe Süsse wie mit Zucker zu erreichen. Die fehlende Masse kann einfach durch Wasser kompensiert werden. Bei Back- und Konditorwaren ist der Volumenersatz jedoch weniger einfach. Denn Zucker dient nicht nur zum Süssen, sondern er bindet Wasser, karamellisiert beim Backen, löst sich in Flüssigkeit auf, stabilisiert, konserviert, beeinflusst die Textur und Konsistenz von Gebäck und Konditorwaren, die Bräunung, das Mundgefühl und stellt einen grossen Teil der Teigmenge dar. Diese Eigenschaften müssen bei einem Austausch oder Ersatz von Zucker in Back- und Konditorwaren ausgeglichen werden.

Zucker wird umgangssprachlich auch Haushaltszucker, Kristallzucker oder Saccharose genannt und ist ein Disaccharid aus je einem Molekül α-D-Glucose und β-D-Fructose.

Aktuell werden als Zuckerersatzstoffe vorwiegend Zuckeraustauschstoffe oder Süssstoffe eingesetzt. Zuckeraustauschstoffe sind süss schmeckende Verbindungen, meist Polyole (sogenannte Zuckeralkohole), die einen geringeren Einfluss auf den Blutzuckerspiegel haben als Zucker (Saccharose), da sie Insulinunabhängig verstoffwechselt werden. Daher werden sie vorwiegend in der Diabetikerernährung verwendet. Süssstoffe sind synthetische hergestellte oder natürliche Ersatzstoffe für Zucker. Sie besitzen sehr unterschiedliche chemische Strukturen. Im Vergleich zu Zucker besitzen Süssstoffe keinen oder nur geringen physiologischen Brennwert.

Die meisten der Zuckeraustauschstoffe und Süssstoffe haben eine ähnliche oder viel stärkere Süsskraft wie Zucker. Während Zuckeralkohole über eine hinreichende Masse oder ein hinreichendes Volumen verfügen, haben sie oft einen negativen Einfluss auf die Textur- und Geschmackseigenschaften von Produkten. Darüber hinaus haben Zuckeralkohole beim Verzehr in größeren Mengen eine abführende Wirkung. Süssstoffe hingegen verfügen aufgrund ihrer Süsskraft nicht über eine hinreichende Masse oder ein hinreichendes Volumen, um Saccharose direkt zu ersetzen, sondern werden ausschließlich zum Süssen verwendet. Süssstoffe schmecken in der Regel nicht ausschließlich süss. Häufig existiert eine zusätzlich bittere Geschmackskomponente. Aufgrund ihrer nachteiligen Eigenschaften ist daher die Verwendung von Zuckeraustauschstoffen und Süssstoffen bei der Herstellung von Lebensmitteln begrenzt.

Bei einem Ersatz von Zucker in Back- und Konditorwaren müssen neben der Süsse vor allem das fehlende Volumen sowie die weiteren Back- und Verarbeitungseigenschaften des Zuckers mit Auswirkung auf Aussehen, Gebäcktextur/Konsistenz, Farbe und Geschmack ersetzt bzw. kompensiert werden.

Zuckerersatzstoffe oder Süssstoffzusammensetzungen werden in verschiedenen Patenten beschrieben. Beispielsweise werden in WO2020/020755A1 verschiedene Süssstoffzusammensetzungen beschrieben, welche Steviolglykosideaggregate und zusätzliche Süssungsmittel enthalten und in allen möglichen Nahrungsmitteln als Zuckerersatz zugegeben werden können. Auf die für Backmischungen besonders benötigten Backeigenschaften wird nicht eingegangen.

WO2020/015816A1 offenbart eine Zusammensetzung für Backwaren, insbesondere ein Zuckermassensubstitut, umfassend ein Aufbauagglomerations-Partikelkollektiv aus einem oder mehreren Trägerstoffen, einem oder mehreren Fetten oder Ölen, kristallinem oder teilkristallinem Zucker und optional einem oder mehreren sensorisch aktiven Substanzen.

WO2016/120228A1 beschreibt eine natürliche Süssstoffzusammensetzung umfassend ein Apfelkonzentrat, ein Luo Han Guo-Konzentrat, sowie weitere Süssstoffe in Getränke-, Lebensmittel-, Arzneimittel-, Mundpflege-, Diät- oder veterinärmedizinischen Produkten.

Die bekannten Süssstoffe haben den Nachteil, dass sie entweder nicht genügend als Zuckerersatz und zur genügenden Kalorienreduktion verwendet werden können, oder dass sie sich in Back- oder Konditorwaren nachteilig auf Geschmack, Aussehen oder Konsistenz auswirken.

### Aufgabe der Erfindung

Aufgabe der vorliegenden Erfindung ist daher, einen Zuckerersatzstoff bereitzustellen, mit welchem der Zucker in Backwaren oder Konditorwaren reduziert oder ersetzt werden kann, damit Back- oder Konditorwaren mit weniger Kalorien als mit Zucker hergestellt werden können, und mit welchem gleichzeitig die back- und verarbeitungsrelevanten Eigenschaften von Zucker, wie beispielsweise die Volumenbildung, die Gebäcktextur, Konsistenz, Farbe, Geschmack und Aussehen in Back- und Konditorwaren aufrecht erhalten werden können.

### Beschreibung der Erfindung

Diese Aufgabe wird mit einem Zuckerersatzstoff für Backwaren oder Konditorwaren gelöst, welcher (a) 40-60 Gew.-% Isomaltulose, (b) 20-40 Gew.-% Erythrit, (c) 8-20 Gew.-% Inulin, und (d) 0.1-1 Gew.-% Steviolglykosid, umfasst, jeweils bezogen auf das Gesamttrockengewicht des Zuckerersatzstoffes. Vorzugsweise besteht der Zuckerersatzstoff aus (a) 40-60 Gew.-% Isomaltulose, (b) 20-40 Gew.-% Erythrit, (c) 8-20 Gew.-% Inulin, und (d) 0.1-1 Gew.-% Steviolglykosid, jeweils bezogen auf das Gesamttrockengewicht des Zuckerersatzstoffes.

Diese erfindungsgemässen Zuckerersatzstoffe liefern Backwaren und Konditorwaren mit allen gewünschten Eigenschaften des herkömmlichen Zuckers (Saccharose) wie Aussehen, Geruch/Duft, Aroma/Geschmack, Textur bzw. Konsistenz sowie Verarbeitung, bei gleichzeitig geringem Kalorienanteil. Herkömmliche Zuckerersatzstoffe oder Zuckerersatzstoffe, die nicht die erfindungsgemässen Mengenverhältnisse der Inhaltsstoffe umfassen, liefern keine befriedigenden Resultate in Back- und Konditorwaren.

Vorzugsweise umfasst die vorliegende Erfindung einen Zuckerersatzstoff umfassend (a) 45-55 Gew.-% Isomaltulose, (b) 30-40 Gew.-% Erythrit, (c) 10-15 Gew.-% Inulin, und (d) 0.1-0.5 Gew.-% Steviolglykosid, bezogen auf das Gesamttrockengewicht des Zuckerersatzstoffes. Besonders bevorzugt besteht der erfindungsgemässe Zuckerersatzstoff aus (a) 45-55 Gew.-% Isomaltulose, (b) 30-40 Gew.-% Erythrit, (c) 10-15 Gew.-% Inulin, und (d) 0.1-0.5 Gew.-% Steviolglykosid, bezogen auf das Gesamttrockengewicht des Zuckerersatzstoffes. In diesen Mengenbereichen werden besonders gute Backeigenschaften oder Verarbeitungseigenschaften erzielt, wenn der Zuckerersatzstoff in Back- und Konditorwaren verwendet wird.

Zusätzlich kann der Zuckerersatzstoff weitere Zusatzstoffe wie beispielsweise mindestens ein Aroma oder verschiedene Aromen enthalten. Vorzugsweise wird der Zuckerersatzstoff aber ohne weitere Zusätze verwendet und besteht nur aus den Inhaltsstoffen Isomaltulose, Erythrit, Inulin und Steviolglykoside in den bevorzugten Mengenverhältnissen.

Isomaltulose ist ein natürlicher Zucker und zählt zur Gruppe der Disaccharide. Er besteht aus Glucose und Fructose, ist geschmacksneutral, karamellisiert beim Backen, hat etwa gleichviele Kalorien wie Saccharose, aber nur etwa 60% der Süsskraft von Saccharose (Zucker). Zudem lässt Isomaltulose den Blutzuckerspiegel weniger schnell ansteigen, da die Verstoffwechselung Insulinunabhängig erfolgt. Isomaltulose ist auch unter dem Markennamen Palatinose^{™} bekannt und hat in der erfindungsgemässen Mischung eine stabilisierende Wirkung in Back- und Konditorwaren, so dass sich diese gut aufschlagen lassen. Daher ist eine genügend grosse Menge an Isomaltose wichtig im erfindungsgemässen Zuckerersatzstoff. Da Isomaltulose einen tieferen Schmelzpunkt und eine tiefere Süsskraft als Saccharose aufweist, ist Isomaltulose alleine nicht als Zuckerersatzstoff in Back- oder Konditorwaren geeignet. Isomaltulose unterscheidet sich sowohl in der chemischen Struktur wie auch in ihren Eigenschaften von Isomalt und Isomaltose. Isomalt und Isomaltose sind nicht geeignet für die Herstellung des erfindungsgemässen Zuckerersatzstoffes mit den gewünschten Eigenschaften und sind daher nicht Gegenstand der vorliegenden Erfindung.

Erythrit, auch bekannt als Erythritol, ist eine süss schmeckende Verbindung und gehört zu den Zuckeralkoholen. In natürlicher Form kommt Erythrit in Pilzen, Käse, Obst (Erdbeeren, Pflaumen) oder Pistazien vor. Erythrit enthält beinahe keine Kalorien und hilft somit, den Kalorienanteil des erfindungsgemässen Zuckerersatzstoffes zu senken. Erythrit hat keinen Einfluss auf den Blutzucker- und Insulinspiegel und wirkt nicht abführend. Allerdings besitzt Erythrit nur etwa 50-70% der Süsskraft von Saccharose, bindet Wasser nicht, hat bei zu hoher Dosierung einen unangenehmen Geschmack und hat keine karamellisierende Wirkung beim Backen. Daher ist Erythrit alleine nicht als Zuckerersatzstoff in Back- oder Konditorwaren geeignet.

Inulin ist ein Gemisch von Polysacchariden aus Fructosebausteinen und einem endständigen Glucoserest. Es zählt zu den Fructanen. Inulin ist ein rein pflanzlicher, wasserlöslicher Ballaststoff, welcher in verschiedenen Gemüsearten und Pflanzen vorkommt. Inulin zählt zu den unverdaulichen Lebensmitteln, welche im Dünndarm von den menschlichen Verdauungsenzymen nicht in signifikanten Mengen abgebaut werden können. Inulin wirkt sich positiv auf die Darmflora und den Blutzuckerspiegel aus, kann aber bei erhöhter Menge abführend wirken und zu Blähungen und Durchfall führen. Inulin besitzt nur etwa 10% der Süsskraft von Saccharose und hat einen leicht bitteren Nachgeschmack. Inulin ist daher kein vollständiger Ersatz von Saccharose. Allerdings bindet Inulin Wasser und verbessert die Konsistenz und Textur von Back- oder Konditorwaren, welche mit dem erfindungsgemässen Zuckerersatzstoff hergestellt werden, deutlich, weshalb Inulin in der richtigen Menge ein unverzichtbarer Inhaltsstoff des erfindungsgemässen Zuckerersatzstoffes ist.

Steviolglykosid wird aus den Blättern der Stevia-Pflanze gewonnen und ist ein natürlicher Süssstoff. Zu den Steviolglykosiden gehören Steviosid, Rebaudiosid, Steviolbiosid und Dulcosid. Für den erfindungsgemässen Zuckerersatzstoff wird vorzugsweise Rebaudiosid, besonders bevorzugt Rebaudiosid A verwendet, da dies eine besonders hohe Süsskraft aufweist. Es kann aber auch ein Gemisch aus verschiedenen Steviolglykosiden verwendet werden. Steviolglykoside haben fast keine Kalorien und können eine bis 450-fache Süsskraft von Zuckers aufweisen. In der erfindungsgemässen Menge sind sie daher besonders geeignet, um dem Zuckerersatzstoff zusammen mit den restlichen Inhaltsstoffen genügend Süsskraft zu verleihen. Da Steviolglykoside einen leichten Nachgeschmack haben und keine karamellisierende Wirkung beim Backen aufweisen, können sie nicht als vollständiger Ersatz von Saccharose in Back- oder Konditorwaren verwendet werden.

Der erfindungsgemässe Zuckerersatzstoff mit den Inhaltsstoffen Isomaltulose, Erythrit, Inulin und Stevilglykosid in den genannten Mengenverhältnissen weist besonders gute Back- und Verarbeitungseigenschaften auf. Er hat die gleiche Süsskraft wie Saccharose aber deutlich weniger Kalorien, wirkt karamellisierend, bindet Wasser, wirkt stabilisierend, und weist einen tieferen glykämischen Index als Saccharose und somit eine konstante Energieverteilung auf. Zudem weisen die damit hergestellten Back- oder Konditorwaren ein schönes Aussehen auf mit der gewünschten Farbe, dem richtigen Aroma/Geschmack und Geruch, sowie der gewünschten Textur und Konsistenz. Ein zusätzlicher Vorteil des erfindungsgemässen Zuckerersatzstoffes ist die bessere Wasserbindungseigenschaft als Saccharose. Dadurch bleiben insbesondere Backwaren länger frisch. Werden die Inhaltsstoffe Isomaltulose, Erythrit, Inulin und Stevilglykosid in kleineren oder grösseren Mengen als in der im erfindungsgemässen Zuckerersatzstoff genannten Menge eingesetzt, sind die Backeregebnisse oder Verarbeitungsergebnisse in Backwaren oder Konditorwaren unbefriedigend.

Backwaren gemäss vorliegender Erfindung sind beispielsweise Brot, Kleingebäck, Feingebäck, insbesondere von Kuchen, Torten, Hefeteiggebäck, Mürbeteiggebäck, Blätterteiggebäck, Strudelteiggebäck, Kekse, Plunder, Dauerbackwaren und Gebäcke jeglicher Art. Konditorwaren gemäss vorliegender Erfindung sind beispielsweise Cremen, Puddings, Füllungen, Mousse, Massen, Rührteige und süsse Butterteige. Besonders geeignet ist der erfindungsgemässe Zuckerersatzstoff für Backwaren, insbesondere Gebäck.

Ein weiterer Gegenstand der vorliegenden Erfindung ist ein Verfahren zur Herstellung des erfindungsgemässen Zuckerersatzstoffes, wobei die Inhaltsstoffe gegebenenfalls granuliert und homogen gemischt werden. Dazu wird vorzugsweise das Steviolglykosie zuerst granuliert, und anschliessend mit den Trockenmassen der restlichen Inhaltsstoffe homogen vermischt, damit eine Zusammensetzung entsteht, welche der von Saccharose ähnlich ist.

Zusätzlich betrifft die vorliegende Erfindung die Verwendung eines Zuckerersatzstoffes als Ersatz von Saccharose in Back- oder Konditorwaren, wobei 50 bis 100 Gew.-% der Saccharose durch den Zuckerersatzstoff ersetzt ist. Vorzugsweise wird die Saccharose vollständig durch den Zuckerersatzstoff ersetzt.

Ein weiterer Gegenstand der vorliegenden Erfindung betrifft die Verwendung des Zuckerersatzstoffes zur Herstellung von Back- oder Konditorwaren, vorzugsweise von Brot, Kleingebäck, Feingebäck, insbesondere von Kuchen, Torten, Hefeteiggebäck, Mürbeteiggebäck, Blätterteiggebäck, Strudelteiggebäck, Kekse und Dauerbackwaren, sowie Cremen und Füllungen für Back- oder Konditorwaren, oder zur Herstellung von Backmischungen.

Besonders geeignet ist der erfindungsgemässe Zuckerersatzstoff für die Herstellung von Backwaren. In Backwaren kommen die besonderen Eigenschaften des Zuckerersatzstoffes, wie die Wasserbindung, Karamellisierung beim Backen, Auflösung in Flüssigkeit, stabilisierende Wirkung, konservierende Wirkung, und die gewünschte Beeinflussung von Textur und Konsistenz von Gebäck und Konditorwaren, besonders zur Geltung.

Ebenfalls Gegenstand der vorliegenden Erfindung sind Back- oder Konditorwaren und Backmischungen umfassend den erfindungsgemässen Zuckerersatzstoff als Ersatz von Saccharose, wobei 50 bis 100 Gew.-% der Saccharose durch den Zuckerersatzstoff ersetzt ist, wobei die Back- oder Konditorwaren ausgewählt sind aus der Gruppe umfassend oder bestehend aus Brot, Kleingebäck, Feingebäck, insbesondere Kuchen, Torten, Hefeteiggebäck, Mürbeteiggebäck, Blätterteiggebäck, Strudelteiggebäck, Kekse, Dauerbackwaren, Cremen und Füllungen für Back- oder Konditorwaren.

### Ausführungsbeispiele der Erfindung

Die vorliegende Erfindung wird im Folgenden durch Ausführungsbeispiele näher beschrieben, die jedoch den Schutzumfang der erfindungsgemässen Gegenstände nicht limitieren.

Verschiedene Mengenverhältnisse des Zuckerersatzstoffes sowie Vergleichssüssstoffe wurden in verschiedenen Back- und Konditorwaren verwendet und einem Qualitätstest unterzogen. Dazu wurden die Gerätschaften, Ofen- und Raumtemperatur, Backzeiten sowie restliche Inhaltsstoffe der Back- oder Konditorwaren identisch gehalten. Um die Qualität zu beurteilen wurden folgende Testkriterien untersucht und die Gewichtung bei der Beurteilung angegeben: Aussehen (Gewichtung von 10%), Geruch/Duft (Gewichtung von 30%), Aroma/Geschmack (Gewichtung von 35%), Textur/Konsistenz (Gewichtung von 25%). Dabei wurden für die verschiedenen Kriterien Punktzahlen vergeben, und mit folgender Legende gearbeitet:

| | |
|---|---|
| 5.5 - 6 | sehr gut |
| 4.8 - 5.4 | gut |
| 4 - 4.7 | genügend |
| 2.5 - 3.9 | ungenügend |
| 1 -2.5 | schlecht |

Ziel war es, dass die Back- und Konditorwaren mit dem erfindungsgemässen Zuckerersatzstoff bei den Testkriterien möglichst nahe an die Originalbackwaren und Konditorwaren mit handelsüblichem Zucker (Saccharose) kommen, ohne dabei Kompromisse bezüglich der Textur und des Geschmacks eingehen zu müssen.

In den folgenden Beispielen wurde ein erfindungsgemässer Zuckerersatzstoff mit 50 Gew.-% Isomaltulose, 37.5 Gew.-% Erythrit, 12 Gew.-% Inulin und 0.5 Gew.-% Rebaudiosid A verwendet und mit Saccharose, Erythrit und einem Vergleichszuckerersatz mit 38 Gew.-% Isomaltulose, 47 Gew.-% Erythrit, 14.5 Gew.-% Inulin und 0.5 Gew.-% Rebaudiosid A verglichen. Weitere Vergleichszuckerersatzstoffe mit Mengenanteilen ausserhalb der erfindungsgemässen Menge wurden ebenfalls analysiert, um den bevorzugten Bereich eines jeden Inhaltsstoffes herauszufinden. Diese sind aber nicht alle im Detail hier angegeben. Beispielsweise ebenfalls unbefriedigende Resultate lieferte ein Vergleichszuckerersatz mit 38 Gew.-% Isomaltulose, 57 Gew.-% Erythrit, 4.5 Gew.-% Inulin und 0.5 Gew.-% Rebaudiosid A.

### Beispiel 1 - Biskuits

Zur Herstellung von Biskuits wurden 6 Eier, 210g Zucker und 210 g Weissmehl vermischt und gebacken. Als Zucker wurde jeweils dieselbe Menge (Trockenmasse) an einem erfindungsgemässen Zuckerersatzstoff (Erfindung), Saccharose, einem herkömmlichen Süssstoff (Erythrit), sowie einem Zuckerersatzstoff ausserhalb der erfindungsgemässen Mengenverhältnisse (Vergleich) verwendet.

### 1.1 Biskuits mit erfindungsgemässem Zuckerersatzstoff (Erfindung: 50 Gew.-% Isomaltulose, 37.5 Gew.-% Erythrit, 12 Gew.-% Inulin und 0.5 Gew.-% Rebaudiosid A):

Die Biskuitmasse mit dem erfindungsgemässen Zuckerersatzstoff liess sich vor dem Backen sehr gut verarbeiten, die Zuckerkristalle lösten sich problemlos auf. Nach dem Backen wiesen die Biskuits eine arttypische Farbe auf, welche etwas stärker ausfiel als mit Kristallzucker. Die Backzeit könnte etwas reduziert werden (Punkte Aussehen: 5). Die Biskuits hatten einen angenehmen, typischen Geruch/Duft (Punkte: 6), einen süssen, ausgewogenen aromatischen Geschmack/Aroma (Punkte: 6) sowie eine arttypische, weiche, luftige und feuchte Struktur. Das Volumen war identisch wie bei der Verwendung mit Saccharose (Punkte Textur/Konsistenz: 6). Gesamtbeurteilung mit erfindungsgemässem Zuckerersatzstoff: 5.9 Punkte, sehr gut.

### 1.2 Biskuits mit herkömmlichem Zucker (Saccharose):

Die Biskuitmasse mit herkömmlichem Zucker liess sich vor dem Backen sehr gut verarbeiten, die Zuckerkristalle lösten sich problemlos auf. Nach dem Backen wiesen die Biskuits eine arttypische Farbe auf. Punkte Aussehen: 6. Die Biskuits hatten einen angenehmen, typischen Geruch/Duft (Punkte: 6), einen süssen, ausgewogenen aromatischen Geschmack/Aroma (Punkte: 6) sowie eine arttypische, weiche, luftige und feuchte Struktur mit schönem Volumen (Punkte Textur/Konsistenz: 6). Gesamtbeurteilung mit Saccharose: 6 Punkte, sehr gut.

### 1.3 Biskuits mit herkömmlichem Süssstoff (100% Erythrit):

Die Biskuitmasse mit Erythrit war vor dem Backen zähflüssig und liess sich nicht gut verarbeiten. Die Zuckerkristalle lösten sich nicht gut auf. Nach dem Backen wiesen die Biskuits eine arttypische Farbe auf, welche etwas stärker ausfiel als mit Kristallzucker. Punkte Aussehen: 4. Die Biskuits hatten einen leicht künstlichen, fremden Geruch/Duft (Punkte: 4), einen künstlichen, kühlen und fremden Nachgeschmack/Aroma (Punkte: 4) sowie eine eher kompakte Struktur, weniger Volumen, sowie eine trockene und bröckelige Konsistenz (Punkte Textur/Konsistenz: 4). Gesamtbeurteilung mit Erythrit: 4 Punkte, genügend.

### 1.4 Biskuits mit Zuckerersatzstoff ausserhalb der erfindungsgemässen Mengenverhältnissen (Vergleich: 38 Gew.-% Isomaltulose, 47 Gew.-% Erythrit, 14.5 Gew.-% Inulin und 0.5 Gew.-% Rebaudiosid A):

Die Biskuitmasse mit einem Zuckerersatzstoff ausserhalb der erfindungsgemässen Mischverhältnisse liess sich vor dem Backen nicht gut verarbeiten. Die Zuckerkristalle lösten sich nicht gut auf. Punkte Aussehen: 4. Die Biskuits hatten einen leicht künstlichen, fremden Geruch/Duft (Punkte: 4), einen künstlichen, kühlen und fremden Nachgeschmack/Aroma (Punkte: 4) sowie eine eher kompakte Struktur, weniger Volumen, sowie eine trockene und bröckelige Konsistenz (Punkte Textur/Konsistenz: 4). Gesamtbeurteilung mit Vergleichszuckerersatz: 4 Punkte, genügend.

**Tabelle 1: Resultat Biskuits**

| | Erfindung | Saccharose | Erythrit | Vergleich |
|---|---|---|---|---|
| Aussehen | 5 | 6 | 4 | 4 |
| Geruch/Duft | 6 | 6 | 4 | 4 |
| Aroma/Geschmack | 6 | 6 | 4 | 4 |
| Textur/Konsistenz | 6 | 6 | 4 | 4 |
| **Gesamturteil** | **5.9 - sehr gut** | **6 - sehr gut** | **4 - genügend** | **4 - genügend** |

Mit dem erfindungsgemässen Zuckerersatzstoff liessen sich sehr schöne Biskuits herstellen, die einem Produkt mit herkömmlichem Zucker vollständig entsprachen und gleichzeitig viel weniger Kalorien aufwiesen. Dagegen wurden mit Erythrit oder mit einem Vergleichszuckerersatz zwar genügende, aber keine befriedigenden Ergebnisse erzielt.

### Beispiel 2 - Butterspritzgebäck

Zur Herstellung eines Butterspritzgebäcks wurden 100g Butter, 1 Vanilleschote, 70g (Puder)zucker, 1 Ei und 150g Weissmehl vermischt, mit einem Spritzsack auf ein Blech dressiert und gebacken. Als Zucker wurde jeweils dieselbe Menge (Trockenmasse) an einem erfindungsgemässen Zuckerersatzstoff (Erfindung), Saccharose in Form von Puderzucker, einem herkömmlichen Süssstoff (Erythrit), sowie einem Zuckerersatzstoff ausserhalb der erfindungsgemässen Mengenverhältnisse (Vergleich) verwendet.

### 2.1 Butterspritzgebäck mit erfindungsgemässem Zuckerersatzstoff (Erfindung: 50 Gew.-% Isomaltulose, 37.5 Gew.-% Erythrit, 12 Gew.-% Inulin und 0.5 Gew.-% Rebaudiosid A):

Die Buttermasse mit dem erfindungsgemässen Zuckerersatzstoff liess sich vor dem Backen sehr gut verarbeiten, die Zuckerkristalle lösten sich problemlos auf, und die Masse wies eine schöne Konsistenz zum Dressieren der Buttermasse auf. Nach dem Backen wiesen die Butterspritzgebäcke eine arttypische Farbe auf (Punkte Aussehen: 6). Die Butterspritzgebäcke hatten einen angenehmen, typischen Geruch/Duft (Punkte: 6), einen süssen, ausgewogenen aromatischen Geschmack/Aroma (Punkte: 6) sowie eine arttypische, aussen knusprige, innen weiche und saftige Konsistenz (Punkte Textur/Konsistenz: 6).

Gesamtbeurteilung mit erfindungsgemässem Zuckerersatzstoff: 6 Punkte, sehr gut.

### 2.2 Butterspritzgebäck mit Saccharose:

Die Buttermasse mit Saccharose liess sich vor dem Backen sehr gut verarbeiten, die Zuckerkristalle lösten sich problemlos auf, und die Masse wies eine schöne Konsistenz zum Dressieren der Buttermasse auf. Nach dem Backen wiesen die Butterspritzgebäcke eine arttypische Farbe auf. Punkte Aussehen: 6. Die Butterspritzgebäcke hatten einen angenehmen, typischen Geruch/Duft (Punkte: 6), einen süssen, ausgewogenen aromatischen Geschmack/Aroma (Punkte: 6) sowie eine arttypische, aussen knusprige, innen weiche und saftige Konsistenz (Punkte Textur/Konsistenz: 6).

Gesamtbeurteilung mit Saccharose: 6 Punkte, sehr gut.

### 2.3 Butterspritzgebäck mit herkömmlichem Süssstoff (100% Erythrit):

Die Buttermasse mit Erythrit war vor dem Backen zähflüssig, sehr dunkel und liess sich nicht gut verarbeiten. Die Zuckerkristalle lösten sich nicht gut auf. Die Masse war fast zu zäh zum Dressieren. Punkte Aussehen: 3. Das Butterspritzgebäck hatte einen leicht künstlichen, fremden Geruch/Duft (Punkte: 3), einen künstlichen und fremden Geschmack/Aroma (Punkte: 3) sowie eine eher harte statt knusprige und innen trockene Konsistenz (Punkte Textur/Konsistenz: 2).

Gesamtbeurteilung mit Erythrit: 2.8 Punkte, ungenügend.

### 2.4 Butterspritzgebäck mit Zuckerersatzstoff ausserhalb der erfindungsgemässen Mengenverhältnissen (Vergleich: 38 Gew.-% Isomaltulose, 47 Gew.-% Erythrit, 14.5 Gew.-% Inulin und 0.5 Gew.-% Rebaudiosid A):

Die Buttermasse mit dem Vergleichszuckerersatz war vor dem Backen zähflüssig, sehr dunkel und liess sich nicht gut verarbeiten. Die Zuckerkristalle lösten sich nicht gut auf. Die Masse war fast zu zäh zum Aufspritzen. Punkte Aussehen: 3. Das Butterspritzgebäck hatte einen leicht künstlichen, fremden Geruch/Duft (Punkte: 3), einen künstlichen und fremden Geschmack/Aroma (Punkte: 3) sowie eine eher harte statt knusprige und innen trockene Konsistenz (Punkte Textur/Konsistenz: 2). Gesamtbeurteilung mit Vergleichszuckerersatz: 2.8 Punkte, ungenügend.

**Tabelle 2: Resultat Butterspritzgebäck**

| | Erfindung | Saccharose | Erythrit | Vergleich |
|---|---|---|---|---|
| Aussehen | 6 | 6 | 3 | 3 |
| Geruch/Duft | 6 | 6 | 3 | 3 |
| Aroma/Geschmack | 6 | 6 | 3 | 3 |
| Textur/Konsistenz | 6 | 6 | 2 | 2 |
| **Gesamturteil** | **6 - sehr gut** | **6 - sehr gut** | **2.8 - ungenügend** | **2.8 - ungenügend** |

Mit dem erfindungsgemässen Zuckerersatzstoff liess sich sehr schönes Butterspritzgebäck herstellen, die einem Produkt mit herkömmlichem Zucker vollständig entsprachen und gleichzeitig viel weniger Kalorien aufwiesen. Dagegen wurden mit Erythrit oder mit einem Vergleichszuckerersatz unbefriedigende Ergebnisse erzielt.

### Beispiel 3 - Meringues

Zur Herstellung von Meringues wurden 2 Eiweisse und 120g Zucker aufgeschlagen, mit einem Spritzsack auf ein Blech dressiert und gebacken. Als Zucker wurde jeweils dieselbe Menge (Trockenmasse) an einem erfindungsgemässen Zuckerersatzstoff (Erfindung), Saccharose, einem herkömmlichen Süssstoff (Erythrit), sowie einem Zuckerersatzstoff ausserhalb der erfindungsgemässen Mengenverhältnisse (Vergleich) verwendet.

### 3.1 Meringues mit erfindungsgemässem Zuckerersatzstoff (Erfindung: 50 Gew.-% Isomaltulose, 37.5 Gew.-% Erythrit, 12 Gew.-% Inulin und 0.5 Gew.-% Rebaudiosid A):

Die Schneemasse mit dem erfindungsgemässen Zuckerersatzstoff liess sich vor dem Backen sehr gut verarbeiten, die Zuckerkristalle lösten sich auf, und die Masse wies eine schöne Farbe und Form auf (Punkte Aussehen: 6). Die Meringues hatten einen angenehmen, frischen, ausgewogenen süssen Geruch/Duft (Punkte: 6), einen süssen, ausgewogenen aromatischen Geschmack/Aroma (Punkte: 6) sowie eine arttypische, weiche, aussen knusprige und innen leicht flüssige Konsistenz (Punkte Textur/Konsistenz: 6).

Gesamtbeurteilung mit erfindungsgemässem Zuckerersatzstoff: 6 Punkte, sehr gut.

### 3.2 Meringues mit Saccharose:

Die Schneemasse mit Saccharose liess sich vor dem Backen sehr gut verarbeiten, die Zuckerkristalle lösten sich auf, und die Masse wies eine schöne Farbe und Form auf. Punkte Aussehen: 6. Die Meringues hatten einen angenehmen, frischen, ausgewogenen süssen Geruch/Duft (Punkte: 6), einen süssen, ausgewogenen aromatischen Geschmack/Aroma (Punkte: 6) sowie eine arttypische, weiche, aussen knusprige und innen leicht flüssige Konsistenz (Punkte Textur/Konsistenz: 6). Gesamtbeurteilung mit Saccharose: 6 Punkte, sehr gut.

### 3.3 Meringues mit herkömmlichem Süssstoff (100% Erythrit):

Die Schneemasse mit Erythrit war vor dem Backen breitgelaufen und sah eher unappetitlich aus. Die Masse liess sich nicht gut Dressieren. Punkte Aussehen: 1. Die Meringues hatten einen seltsamen, fremden Geruch/Duft (Punkte: 3), einen leicht verbrannten Geschmack/Aroma (Punkte: 3.5) sowie eine weiche und gummige Konsistenz (Punkte Textur/Konsistenz: 2).

Gesamtbeurteilung mit Erythrit: 2.7 Punkte, ungenügend.

### 3.4 Meringues mit Zuckerersatzstoff ausserhalb der erfindungsgemässen Mengenverhältnissen (Vergleich: 38 Gew.-% Isomaltulose, 47 Gew.-% Erythrit, 14.5 Gew.-% Inulin und 0.5 Gew.-% Rebaudiosid A):

Die Schneemasse mit dem Vergleichszuckerersatz war vor dem Backen breitgelaufen und sah eher unappetitlich aus. Die Masse liess sich nicht gut Aufspritzen. Punkte Aussehen: 1. Die Meringues hatten einen seltsamen, fremden Geruch/Duft (Punkte: 3), einen leicht verbrannten Geschmack/Aroma (Punkte: 3.5) sowie eine weiche und gummige Konsistenz (Punkte Textur/Konsistenz: 2).

Gesamtbeurteilung mit Vergleichszuckerersatz: 2.7 Punkte, ungenügend.

**Tabelle 3: Resultat Meringues**

| | Erfindung | Saccharose | Erythrit | Vergleich |
|---|---|---|---|---|
| Aussehen | 6 | 6 | 1 | 1 |
| Geruch/Duft | 6 | 6 | 3 | 3 |
| Aroma/Geschmack | 6 | 6 | 3.5 | 3.5 |
| Textur/Konsistenz | 6 | 6 | 2 | 2 |
| **Gesamturteil** | **6 - sehr gut** | **6 - sehr gut** | **2.7 - ungenügend** | **2.7 - ungenügend** |

Mit dem erfindungsgemässen Zuckerersatzstoff liessen sich sehr schöne Meringues herstellen, die einem Produkt mit herkömmlichem Zucker vollständig entsprachen und gleichzeitig viel weniger Kalorien aufwiesen. Dagegen wurden mit Erythrit oder mit einem Vergleichszuckerersatz unbefriedigende Ergebnisse erzielt.

### Beispiel 4 - Süsse Brötchen

Zur Herstellung von einem süssen Hefeteig wurden 250g Milch, 50g Zucker, 35g Hefe, 1 Ei, 1 Vanilleschote, 500g Mehl, 70g Butter und 10g Salz vermischt und gebacken. Als Zucker wurde jeweils dieselbe Menge (Trockenmasse) an einem erfindungsgemässen Zuckerersatzstoff (Erfindung), Saccharose, einem herkömmlichen Süssstoff (Erythrit), sowie einem Zuckerersatzstoff ausserhalb der erfindungsgemässen Mengenverhältnisse (Vergleich) verwendet.

### 4.1 Süsse Brötchen mit erfindungsgemässem Zuckerersatzstoff (Erfindung: 50 Gew.-% Isomaltulose, 37.5 Gew.-% Erythrit, 12 Gew.-% Inulin und 0.5 Gew.-% Rebaudiosid A):

Der süsse Hefeteig mit dem erfindungsgemässen Zuckerersatzstoff liess sich vor dem Backen sehr gut verarbeiten, der Teig wies typische Hefeteigeigenschaften auf. Nach dem Backen wiesen die Brötchen eine arttypische Farbe und Form auf, der Backtrieb war schön, das Volumen ausgeprägt, der Teig wie eine sehr gute Hefenahrung auf (leicht besser als mit Saccharose) (Punkte Aussehen: 6). Die Brötchen hatten einen angenehmen, arttypischen Geruch/Duft (Punkte: 6), einen süssen, ausgewogenen aromatischen Geschmack/Aroma (Punkte: 6) sowie eine arttypische, weiche, und luftige Textur mit schönem Volumen (Punkte Textur/Konsistenz: 6).

Gesamtbeurteilung mit erfindungsgemässem Zuckerersatzstoff: 6 Punkte, sehr gut.

### 4.2 Süsse Brötchen mit herkömmlichem Zucker (Saccharose):

Der Hefeteig mit herkömmlichem Zucker liess sich vor dem Backen sehr gut verarbeiten, der Teig wies typische Hefeteigeigenschaften auf. Nach dem Backen wiesen die Brötchen eine arttypische Farbe auf, der Trieb und das Volumen warne etwas kleiner als mit dem erfindungsgemässen Zuckerersatzstoff. Punkte Aussehen: 5,5. Die Brötchen hatten einen angenehmen, typischen Geruch/Duft (Punkte: 6), einen süssen, ausgewogenen aromatischen Geschmack/Aroma (Punkte: 6) sowie eine arttypische, weiche, und luftige Textur (Punkte Textur/Konsistenz: 6). Gesamtbeurteilung mit Saccharose: 6 Punkte, sehr gut.

### 4.3 Süsse Brötchen mit herkömmlichem Süssstoff (100% Erythrit):

Der Hefeteig mit Erythrit ergab vor dem Backen keinen glatten Teig. Die Zuckerkristalle lösten sich nicht gut auf und der Backtrieb war schwach. Nach dem Backen wiesen die süssen Brötchen einen schwachen Backtrieb und somit schwaches Volumen auf. Es war kein Zucker für Hefenahrung verfügbar. Punkte Aussehen: 2. Die Brötchen hatten einen leicht künstlichen, fremden Geruch/Duft (Punkte: 5), einen künstlichen, kühlen und fremden Nachgeschmack/Aroma (Punkte: 4) sowie eine eher zähe Struktur und gedrungenes Volumen (Punkte Textur/Konsistenz: 3). Gesamtbeurteilung mit Erythrit: 3,9 Punkte, ungenügend.

### 4.4 Süsse Brötchen mit Zuckerersatzstoff ausserhalb der erfindungsgemässen Mengenverhältnissen (Vergleich: 38 Gew.-% Isomaltulose, 47 Gew.-% Erythrit, 14.5 Gew.-% Inulin und 0.5 Gew.-% Rebaudiosid A):

Der Hefeteig mit einem Vergleichszuckerersatz ergab vor dem Backen keinen glatten Teig. Die Zuckerkristalle lösten sich nicht gut auf und der Backtrieb war schwach. Nach dem Backen wiesen die süssen Brötchen einen schwachen Backtrieb und somit schwaches Volumen auf. Es war kein Zucker für Hefenahrung verfügbar. Punkte Aussehen: 2. Die Brötchen hatten einen leicht künstlichen, fremden Geruch/Duft (Punkte: 5), einen künstlichen, kühlen und fremden Nachgeschmack/Aroma (Punkte: 4) sowie eine eher zähe Struktur und gedrungenes Volumen (Punkte Textur/Konsistenz: 3).

Gesamtbeurteilung mit Erythrit: 3,9 Punkte, ungenügend.

**Tabelle 4: Resultat Süsse Brötchen**

| | Erfindung | Saccharose | Erythrit | Vergleich |
|---|---|---|---|---|
| Aussehen | 6 | 5,5 | 2 | 2 |
| Geruch/Duft | 6 | 6 | 5 | 5 |
| Aroma/Geschmack | 6 | 6 | 4 | 4 |
| Textur/Konsistenz | 6 | 6 | 3 | 3 |
| **Gesamturteil** | **6 - sehr gut** | **6 - sehr gut** | **3,9 - ungenügend** | **3,9 - ungenügend** |

Mit dem erfindungsgemässen Zuckerersatzstoff liessen sich sehr schöne süsse Brötchen herstellen, die einem Produkt mit herkömmlichem Zucker vollständig entsprachen und gleichzeitig viel weniger Kalorien aufwiesen. Dagegen wurden mit Erythrit oder mit einem Vergleichszuckerersatz keine befriedigenden Ergebnisse erzielt.

### Beispiel 5 - Vanillecreme

Zur Herstellung einer Vanillecreme für eine Creme oder eine Füllung für ein Gebäck wurden 300g Milch, 50g Zucker, 1 Eigelb, 30g Maisstärke vermischt, aufgekocht und gerührt bis eine cremige Masse entstand. Als Zucker wurde jeweils dieselbe Menge (Trockenmasse) an einem erfindungsgemässen Zuckerersatzstoff (Erfindung), Saccharose, einem herkömmlichen Süssstoff (Erythrit), sowie einem Zuckerersatzstoff ausserhalb der erfindungsgemässen Mengenverhältnisse (Vergleich) verwendet.

### 5.1 Vanillecreme mit erfindungsgemässem Zuckerersatzstoff (Erfindung: 50 Gew.- % Isomaltulose, 37.5 Gew.-% Erythrit, 12 Gew.-% Inulin und 0.5 Gew.-% Rebaudiosid A):

Die Vanillecreme mit dem erfindungsgemässen Zuckerersatzstoff liess sich gut verarbeiten und wies eine schöne, arttypische Farbe und Form auf (Punkte Aussehen: 6). Die Vanillecreme hatte einen angenehmen, typischen Geruch/Duft (Punkte: 6), einen süssen, ausgewogenen aromatischen Geschmack/Aroma (Punkte: 6) sowie eine arttypische, weiche und luftige Textur, welche mit dem Original mit Saccharose identisch war (Punkte Textur/Konsistenz: 6).

Gesamtbeurteilung mit erfindungsgemässem Zuckerersatzstoff: 6 Punkte, sehr gut.

### 5.2 Vanillecreme mit Saccharose:

Die Vanillecreme mit dem erfindungsgemässen Zuckerersatzstoff liess sich gut verarbeiten und wies eine schöne, arttypische Farbe und Form auf. Punkte Aussehen: 6. Die Vanillecreme hatte einen angenehmen, typischen Geruch/Duft (Punkte: 6), einen süssen, ausgewogenen aromatischen Geschmack/Aroma (Punkte: 6) sowie eine arttypische, weiche und luftige Textur (Punkte Textur/Konsistenz: 6). Gesamtbeurteilung mit Saccharose: 6 Punkte, sehr gut.

### 5.3 Vanillecreme mit herkömmlichem Süssstoff (100% Erythrit):

Die Vanillecreme mit Erythrit liess sich nicht homogenisieren, die Masse zog etwas Wasser und war leicht körnig. Punkte Aussehen: 3. Die Vanillecreme hatte einen leicht künstlichen, fremden Geruch/Duft (Punkte: 3), einen künstlichen, fremden, kühlenden Geschmack/Aroma (Punkte: 3) sowie eine körnige Textur, welche sich nicht homogenisieren liess (Punkte Textur/Konsistenz: 2).

Gesamtbeurteilung mit Saccharose: 2,8 Punkte, ungenügend.

### 5.4 Vanillecreme mit Zuckerersatzstoff ausserhalb der erfindungsgemässen Mengenverhältnissen (Vergleich: 38 Gew.-% Isomaltulose, 47 Gew.-% Erythrit, 14.5 Gew.-% Inulin und 0.5 Gew.-% Rebaudiosid A):

Die Vanillecreme mit dem Vergleichszuckerersatz liess sich nicht homogenisieren, die Masse zog etwas Wasser und war leicht körnig. Punkte Aussehen: 3. Die Vanillecreme hatte einen leicht künstlichen, fremden Geruch/Duft (Punkte: 3), einen künstlichen, fremden, kühlenden Geschmack/Aroma (Punkte: 3) sowie eine körnige Textur, welche sich nicht homogenisieren liess (Punkte Textur/Konsistenz: 2).

Gesamtbeurteilung mit Saccharose: 2,8 Punkte, ungenügend.

**Tabelle 5: Resultat Vanillecreme**

| | Erfindung | Saccharose | Erythrit | Vergleich |
|---|---|---|---|---|
| Aussehen | 6 | 6 | 3 | 3 |
| Geruch/Duft | 6 | 6 | 3 | 3 |
| Aroma/Geschmack | 6 | 6 | 3 | 3 |
| Textur/Konsistenz | 6 | 6 | 2 | 2 |
| **Gesamturteil** | **6 - sehr gut** | **6 - sehr gut** | **2.8 - ungenügend** | **2.8 - ungenügend** |

Mit dem erfindungsgemässen Zuckerersatzstoff liess sich eine Vanillecreme herstellen, die einem Produkt mit herkömmlichem Zucker vollständig entsprach und gleichzeitig viel weniger Kalorien aufwies. Dagegen wurden mit Erythrit oder mit einem Vergleichszuckerersatz unbefriedigende Ergebnisse erzielt.

## Patentansprüche

1. Zuckerersatzstoff für Backwaren und Konditorwaren, **dadurch gekennzeichnet, dass** der Zuckerersatzstoff
(a) 40-60 Gew.-% Isomaltulose,
(b) 20-40 Gew.-% Erythrit,
(c) 8-20 Gew.-% Inulin, und
(d) 0.1-1 Gew.-% Steviolglykoside,
umfasst, bezogen auf das Gesamttrockengewicht des Zuckerersatzstoffes.

2. Zuckerersatzstoff nach Anspruch 1, wobei der Zuckerersatzstoff aus
(a) 40-60 Gew.-% Isomaltulose,
(b) 20-40 Gew.-% Erythrit,
(c) 8-20 Gew.-% Inulin, und
(d) 0.1-1 Gew.-% Steviolglykoside,
besteht, bezogen auf das Gesamttrockengewicht des Zuckerersatzstoffes.

3. Zuckerersatzstoff nach Anspruch 1, wobei der Zuckerersatzstoff
(a) 45-55 Gew.-% Isomaltulose,
(b) 30-40 Gew.-% Erythrit,
(c) 10-15 Gew.-% Inulin, und
(d) 0.1-0.5 Gew.-% Steviolglykoside,
umfasst, bezogen auf das Gesamttrockengewicht des Zuckerersatzstoffes.

4. Zuckerersatzstoff nach Anspruch 3, wobei der Zuckerersatzstoff aus
(a) 45-55 Gew.-% Isomaltulose,
(b) 30-40 Gew.-% Erythrit,
(c) 10-15 Gew.-% Inulin, und
(d) 0.1-0.5 Gew.-% Steviolglykoside,
besteht, bezogen auf das Gesamttrockengewicht des Zuckerersatzstoffes.

5. Zuckerersatzstoff nach einem der vorhergehenden Ansprüche, wobei das Steviolglykosid Rebaudiosid A ist.

6. Zuckerersatzstoff nach Anspruch 1 oder 3, wobei der Zuckerersatzstoff zusätzlich mindestens ein Aroma umfasst.

7. Verfahren zur Herstellung des Zuckerersatzstoffes nach einem der Ansprüche 1 bis 6, **dadurch gekennzeichnet, dass** die Inhaltsstoffe granuliert und homogen gemischt werden.

8. Verwendung eines Zuckerersatzstoffes nach einem der Ansprüche 1 bis 6 als Ersatz von Saccharose in Back- oder Konditorwaren, wobei 50 bis 100 Gew.-% der Saccharose durch den Zuckerersatzstoff ersetzt ist.

9. Verwendung nach Anspruch 8, wobei die Saccharose vollständig durch den Zuckerersatzstoff nach einem der Ansprüche 1 bis 6 ersetzt ist.

10. Verwendung des Zuckerersatzstoffes nach einem der Ansprüche 1 bis 6 zur Herstellung von Back- oder Konditorwaren, vorzugsweise von Brot, Kleingebäck, Feingebäck, insbesondere von Kuchen, Torten, Hefeteiggebäck, Mürbeteiggebäck, Blätterteiggebäck, Strudelteiggebäck, Kekse, Dauerbackwaren, Cremen oder Füllungen für Konditorwaren, oder zur Herstellung von Backmischungen.

11. Back- oder Konditorwaren umfassend den Zuckerersatzstoff nach einem der Ansprüche 1 bis 6 als Ersatz von Saccharose, wobei 50 bis 100 Gew.-% der Saccharose durch den Zuckerersatzstoff nach einem der Ansprüche 1 bis 6 ersetzt ist, und wobei die Back- oder Konditorwaren ausgewählt sind aus der Gruppe umfassend oder bestehend aus Brot, Kleingebäck, Feingebäck, insbesondere Kuchen, Torten, Hefeteiggebäck, Mürbeteiggebäck, Blätterteiggebäck, Strudelteiggebäck, Kekse, Dauerbackwaren, Cremen und Füllungen für Back- oder Konditorwaren.

12. Backmischung umfassend den Zuckerersatzstoff nach einem der Ansprüche 1 bis 6 als Ersatz von Saccharose, wobei 50 bis 100 Gew.-% der Saccharose durch den Zuckerersatzstoff nach einem der Ansprüche 1 bis 6 ersetzt ist.

## Claims

1. A sugar substitute for baked goods and confectionery, **characterized in that** the sugar substitute comprises
(a) 40-60 % by weight of isomaltulose,
(b) 20-40 % by weight of erythritol,
(c) 8-20 % by weight of inulin, and
(d) 0.1-1 % by weight of steviol glycosides,
based on the total dry weight of the sugar substitute.

2. The sugar substitute as claimed in claim 1, wherein the sugar substitute consists of
(a) 40-60 % by weight of isomaltulose,
(b) 20-40 % by weight of erythritol,
(c) 8-20 % by weight of inulin, and
(d) 0.1-1 % by weight of steviol glycosides,
based on the total dry weight of the sugar substitute.

3. The sugar substitute as claimed in claim 1, wherein the sugar substitute comprises
(a) 45-55 % by weight of isomaltulose,
(b) 30-40 % by weight of erythritol,
(c) 10-15 % by weight of inulin, and
(d) 0.1-0.5 % by weight of steviol glycosides,
based on the total dry weight of the sugar substitute.

4. The sugar substitute as claimed in claim 3, wherein the sugar substitute consists of
(a) 45-55 % by weight of isomaltulose,
(b) 30-40 % by weight of erythritol,
(c) 10-15 % by weight of inulin, and
(d) 0.1-0.5 % by weight of steviol glycosides,
based on the total dry weight of the sugar substitute.

5. The sugar substitute as claimed in one of the preceding claims, wherein the steviol glycoside is rebaudioside A.

6. The sugar substitute as claimed in claim 1 or claim 3, wherein the sugar substitute additionally comprises at least one flavouring.

7. A method for the manufacture of the sugar substitute as claimed in any one of claims 1 to 6, **characterized in that** the ingredients are granulated and homogeneously mixed.

8. Use of a sugar substitute as claimed in one of claims 1 to 6 as a substitute for sucrose in baked goods or confectionery, wherein 50 % to 100 % by weight of the sucrose is replaced by the sugar substitute.

9. Use as claimed in claim 8, wherein the entirety of the sucrose is replaced by the sugar substitute as claimed in any one of claims 1 to 6.

10. Use of the sugar substitute as claimed in any one of claims 1 to 6 for the manufacture of baked goods or confectionery, preferably bread, biscuits, pastries, in particular cakes, tarts, yeast dough pastries, shortcrust pastries, puff pastries, strudel pastries, cookies, long-life baked goods, creams or fillings for confectionery, or for the manufacture of baking mixes.

11. Baked goods or confectionery comprising the sugar substitute as claimed in any one of claims 1 to 6, as a substitute for sucrose, wherein 50 % to 100 % by weight of the sucrose is replaced by the sugar substitute as claimed in any one of claims 1 to 6, and wherein the baked goods or confectionery are selected from the group comprising or consisting of bread, biscuits, pastries, in particular cakes, tarts, yeast dough pastries, shortcrust pastries, puff pastries, strudel pastries, cookies, long-life baked goods, creams and fillings for baked goods or confectionery.

12. A baking mix comprising the sugar substitute as claimed in any one of claims 1 to 6 as a substitute for sucrose, wherein 50 % to 100 % by weight of the sucrose is replaced by the sugar substitute as claimed in any one of claims 1 to 6.

## Revendications

1. Succédané de sucre pour produits de boulangerie et de pâtisserie,
**caractérisé en ce que** le succédané de sucre comprend
(a) de 40 à 60 % en poids d'isomaltulose,
(b) de 20 à 40 % en poids d'érythritol,
(c) de 8 à 20 % en poids d'inuline, et
(d) de 0,1 à 1 % en poids de glycosides de stéviol,
rapportés au poids total sec du succédané de sucre.

2. Succédané de sucre selon la revendication 1, le succédané de sucre étant constitué
(a) de 40 à 60 % en poids d'isomaltulose,
(b) de 20 à 40 % en poids d'érythritol,
(c) de 8 à 20 % en poids d'inuline, et
(d) de 0,1 à 1 % en poids de glycosides de stéviol,
rapportés au poids total sec du succédané de sucre.

3. Succédané de sucre selon la revendication 1, le succédané de sucre comprenant
(a) de 45 à 55 % en poids d'isomaltulose,
(b) de 30 à 40 % en poids d'érythritol,
(c) de 10 à 15 % en poids d'inuline, et
(d) de 0,1 à 0.5 % en poids de glycosides de stéviol,
rapportés au poids total sec du succédané de sucre.

4. Succédané de sucre selon la revendication 3, le succédané de sucre étant constitué
(a) de 45 à 55 % en poids d'isomaltulose,
(b) de 30 à 40 % en poids d'érythritol,
(c) de 10 à 15 % en poids d'inuline, et
(d) de 0,1 à 0.5 % en poids de glycosides de stéviol,
rapportés au poids total sec du succédané de sucre.

5. Succédané de sucre selon l'une quelconque des revendications précédentes, le glycoside de stéviol étant du rebaudioside A.

6. Succédané de sucre selon la revendication 1 ou 3, le succédané de sucre comprenant additionnellement au moins un arôme.

7. Procédé, destiné à produire le succédané de sucre selon l'une quelconque des revendications 1 à 6, **caractérisé en ce que** l'on granule et on mélange de manière homogène les ingrédients.

8. Utilisation du succédané de sucre selon l'une quelconque des revendications 1 à 6 en qualité de substitut du saccharose dans des articles de boulangerie ou de pâtisserie, de 50 à 100 % en poids du saccharose étant remplacé par le succédané de sucre.

9. Utilisation selon la revendication 8, le saccharose étant totalement remplacé par le succédané de sucre selon l'une quelconque des revendications 1 à 6.

10. Utilisation du succédané de sucre selon l'une quelconque des revendications 1 à 6 pour confectionner des produits de boulangerie ou de pâtisserie, de préférence du pain, des viennoiseries, des biscuits, notamment des gâteaux, des tartes, des pâtisseries en pâte levée, des sablés, des feuilletés, des pâtisseries en pâte à strudel, des gâteaux secs, de la boulangerie de longue conservation, des crèmes ou des garnitures pour des articles de pâtisserie ou pour confectionner des préparations boulangères instantanées.

11. Articles de boulangerie ou de pâtisserie comprenant le succédané de sucre selon l'une quelconque des revendications 1 à 6 en tant que substitut du saccharose, de 50 à 100 % en poids du saccharose étant remplacés par le succédané de sucre selon l'une quelconque des revendications 1 à 6, et les produits de boulangerie ou de pâtisserie étant sélectionnés dans le groupe comprenant ou consistant dans du pain, des viennoiseries, des biscuits, notamment des gâteaux, des tartes, des pâtisseries en pâte levée, des sablés, des feuilletés, des pâtisseries en pâte à strudel, des gâteaux secs, de la boulangerie de longue conservation, des crèmes ou des garnitures pour des articles de pâtisserie.

12. Préparation boulangère instantanée comprenant le succédané de sucre selon l'une quelconque des revendications 1 à 6 en tant que succédané du saccharose, de 50 à 100 % en poids du saccharose étant remplacé par le succédané de sucre selon l'une quelconque des revendications 1 à 6.
